(19) Europäisches Patentamt / European Patent Office / Office européen des brevets

(11) **EP 1 690 423 B1**

(12) **EUROPEAN PATENT SPECIFICATION**

(45) Date of publication and mention of the grant of the patent:
**18.03.2020 Bulletin 2020/12**

(21) Application number: **04813479.5**

(22) Date of filing: **01.12.2004**

(51) Int Cl.:
*H04N 19/85* (2014.01)

(86) International application number:
**PCT/US2004/041164**

(87) International publication number:
**WO 2005/057936 (23.06.2005 Gazette 2005/25)**

(54) **TECHNIQUE FOR FILM GRAIN SIMULATION USING A DATABASE OF FILM GRAIN PATTERNS**

SIMULATION VON FILMRAUSCHEN UNTER VERWENDUNG EINER RAUSCHMUSTERDATENBANK

PROCEDE PERMETTANT DE SIMULER LE GRAIN D'UN FILM A L'AIDE D'UNE BASE DE DONNEES DE MOTIFS DE GRAINS DE FILMS

(84) Designated Contracting States:
**AT BE BG CH CY CZ DE DK EE ES FI FR GB GR HU IE IS IT LI LT LU MC NL PL PT RO SE SI SK TR**

(30) Priority: **05.12.2003 US 527895 P**

(43) Date of publication of application:
**16.08.2006 Bulletin 2006/33**

(60) Divisional application:
**07103949.9 / 1 809 043**

(73) Proprietor: **InterDigital VC Holdings, Inc.
Wilmington, DE 19809 (US)**

(72) Inventors:
• **COOPER, Jeffrey, Allen
Rock Hill, NJ 08540 (US)**
• **BOYCE, Jill, MacDonald
Manalapan, NJ 08540 (US)**
• **TOURAPIS, Alexandros
West Windson, NJ 08550 (US)**
• **GOMILA, Cristina
Princeton, NJ 08540 (US)**
• **LLACH, Joan
Princeton, NJ 08540 (US)**
• **YIN, Peng
West Windsor, NJ 08540 (US)**

(74) Representative: **Rolland, Sophie et al
InterDigital CE Patent Holdings
20, rue Rouget de Lisle
92130 Issy-les-Moulineaux (FR)**

(56) References cited:
**WO-A-97/22204      US-A- 5 641 596**

• **CHRISTINA GOMILA: "SEI message for film grain encoding: syntax and results" JVT OF ISO IEC MPEG AND ITU-T VCEG JVT-I013 REVISION 2, 2 September 2003 (2003-09-02), pages 1-11, XP002308743 SAN DIEGO, CA, USA**
• **SCHLOCKERMANN M ET AL: "Film grain coding in H.264/AVC" JOINT VIDEO TEAM (JVT) OF ISO/IEC MPEG & ITU-T VCEG (ISO/IEC JTC1/SC29/WG11 AND ITU-T SG16 Q6), 2 September 2003 (2003-09-02), pages 1-8, XP002311238 SAN DIEGO, CA, USA**
• **CHRISTINA GOMILA, ALEXANDER KOBILANSKY: "SEI message for film grain encoding" JVT OF ISO IEC MPEG AND ITU-T VCEG JVT-H022, 23 May 2003 (2003-05-23), pages 1-14, XP002308742 GENEVA, SWITZERLAND**

**Description**

CROSS-REFERENCE TO RELATED APPLICATIONS

This application claims priority under 35 U.S.C. 119(e) to U.S. Provisional Patent Application Serial No. 60/527,895 filed on December 5, 2003, 2003.

TECHNICAL FIELD

This invention relates to a technique for simulating film grain in an image.

BACKGROUND ART

Motion picture films comprise silver-halide crystals dispersed in an emulsion, which is coated in thin layers on a film base. The exposure and development of these crystals form the photographic image consisting of discrete tiny particles of silver. In color negatives, tiny blobs of dye occur on the sites where the silver crystals form following chemical removal of the silver during development of the film stock. These small specks of dye commonly bear the label 'grain' in color film. Grain appears randomly distributed on the resulting image because of the random formation of silver crystals on the original emulsion. Within a uniformly exposed area, some crystals develop after exposure while others do not.

Grain varies in size and shape. The faster the film, the larger the clumps of silver formed and blobs of dye generated, and the more they tend to group together in random patterns. The term "granularity" typically refers to the grain pattern. The naked eye cannot distinguish individual grains, which vary from 0.0002 mm to about 0.002 mm. Instead, the eye resolves groups of grains, referred to as blobs. A viewer identifies these groups of blobs as film grain. As the image resolution becomes larger, the perception of the film grain becomes higher. Film grain becomes clearly noticeable on cinema and High Definition (HD) images, whereas film grain progressively loses importance in Standard Definition (SD) and becomes imperceptible in smaller formats.

Motion picture film typically contains image-dependent noise resulting either from the physical process of exposure and development of the photographic film or from the subsequent editing of the images. Photographic film possesses a characteristic quasi-random pattern, or texture, resulting from physical granularity of the photographic emulsion. Alternatively, simulation of similar pattern can occur in computed-generated images in order to blend them with photographic film. In both cases, this image-dependent noise bears the designation of "film grain." Quite often, moderate grain texture presents a desirable feature in motion pictures. In some instances, the film grain provides visual cues that facilitate the correct perception of two-dimensional pictures. Film grade often varies within a single film to provide various clues as to time reference, point of view, etc. Many other technical and artistic demands exist for controlling grain texture in the motion picture industry. Therefore, preserving the grainy appearance of images throughout image processing and delivery chain has become a requirement in the motion picture industry.

Several commercially available products have the capability of simulating film grain, often for blending a computer-generated object into natural scene. Cineon® from Eastman Kodak Co, Rochester New York, one of the first digital film applications to implement grain simulation, produces very realistic results for many grain types. However, the Cineon® application does not yield good performance for many high speed films because of the noticeable diagonal stripes the application produces for high grain size settings. Further, the Cineon® application fails to simulate grain with adequate fidelity when images become subject to prior processing, for example, such as when the images are copied or digitally processed.

Another commercial product that simulates film grain is *Grain Surgery*™ from Visual Infinity Inc., which is used as a plug-in of Adobe ® After Effects ®. The *Grain Surgery*™ product appears to generate synthetic grain by filtering a set of random numbers. US 2003/206662 A1 (AVINASH GOPAL B [US] ET AL) 6 November 2003 (2003-11-06) discloses to blend pre-generated film grain, which is adapted to the image pixel intensities on the fly, onto the input image. These approaches suffer from disadvantage of a high computational complexity.

Thus, a need exists for an efficient film grain simulation technique, which reduces the need for memory bandwidth, and computational effort, thus permitting film grain simulation in cost-sensitive high volume devices, such as set top boxes.

BRIEF SUMMARY OF THE INVENTION

Briefly, in accordance with one aspect of the present invention, there is provided a method for creating a block of M x N pixels with film grain for blending with pixels of an image block, where N and M are integers greater than zero. The method commences upon the receipt of film grain information that includes at least one parameter that specifies an attribute of the film grain to appear in the film grain block. (Those parameters that are not transmitted shall be set to default values. In a particular embodiment, default values could be derived as specified in the H.264IAVC standard.) A film grain block of M x N pixels is selected from among a database of previously established blocks containing film grain as a function of a pseudo-random number and a set of cut frequencies characterizing the film grain pattern. All the pixel values in the selected film grain block undergo scaling in accordance with the one parameter in the received film grain information. The created block of film grain then becomes part of a pool of film grain blocks from which a block is selected for blending with pixels in an image block to simulate film grain in the image block.

In accordance with another aspect of the present invention, there is provided a method for simulating film grain in an image block of pixels. The method commences upon selection of a block of film grain from a pool of pre-established film grain values. The selection of the block of film grain occurs randomly, in accordance with a random number, amongst those blocks from the pool for the luma intensity interval corresponding to the luma average value of the image block. The selected film grain block undergoes deblocking. At least a portion of the deblocked film grain block is blended with individual pixels of the image block to simulate film grain and the resultant blended pixels are clipped prior to output, such as for display or the like.

BRIEF DESCRIPTION OF THE DRAWINGS

FIGURE 1 depicts a block schematic drawing of an apparatus for generating pre-established film grain blocks for use in subsequent film grain simulation; and
FIGURE 2 depicts a block schematic drawing of an apparatus in accordance with the present principles for simulating film grain on a pixel-by-pixel basis using the pre-established film grain blocks generated by the apparatus of FIG. 1.

DETAILED DESCRIPTION

Introduction

In accordance with the present principles, film grain simulation occurs in accordance with film grain information transmitted with an image to which the simulated grain is blended. In practice, the transmitted image typically undergoes compression (encoding) prior to transmission via one of a variety of well-known compression schemes, such as the H.264 compression scheme. With the transmitted image compressed using the H.264 compression scheme, transmission of the film grain information typically occurs via a Supplemental Enhancement Information (SEI) message. Pursuant to contributions recently adopted by the standards body responsible for promulgating the H.264 standard, such as CHRISTINA GOMILA, "SEI message for film grain encoding: syntax and results", JVT OF ISO IEC MPEG AND ITU-T VCEG JVT-I013 REVISION 2, 02-09-2003,SAN DIEGO, CA, USA, the SEI message can now include various parameters that specify different film grain attributes.

Constraints on the film grain SEI message parameters

The method of the present principles imposes some constraints with regard to the number of parameters and their range of possible values allowed by the H.264 recommendation. TABLE 1 provides a list of such parameters, including a description of their semantics and the constraints imposed by the present principles.

TABLE 1

| FILM GRAIN PARAMETER | DESCRIPTION & CONSTRAINTS |
|---|---|
| model_id | This parameter specifies the simulation model. It shall be 0, which identifies the film grain simulation model as frequency filtering. |
| separate_colour_ description_present_flag | This parameter specifies if the color space in which the parameters are estimated is different from the color space in which the video sequence (where the film grain SEI message has been embedded) has been encoded. It shall be 0, which identifies the color space for film grain the same than the encoded sequence. |
| blending_mode_id | This parameter identifies the blending mode used to blend the simulated film grain with the decoded images. It shall be 0, which correspond to an additive blending mode. |

(continued)

| FILM GRAIN PARAMETER | DESCRIPTION & CONSTRAINTS |
|---|---|
| **log2_scale_factor** | This parameter identifies the logarithmic scale factor used to represent the film grain parameters in the SEI message. It shall be in the range [0, 4] to ensure film grain simulation can be performed using 16-bit arithmetic. |
| **comp_model_present_flag [1]** | This parameter enables the transmission of film grain parameters for the Cb color component in the YCbCr color space. It shall be 0, since film grain simulation in chroma is not supported. |
| **comp_model_present_flag [2]** | This parameter enables the transmission of film grain parameters for the Cr color component in the YCbCr color space. It shall be 0, since film grain simulation in chroma is not supported. |
| **num_intensity_intervals_ minus1[0]** | This parameter defines the number of intensity intervals for which a specific set of parameters has been estimated. It shall be in the range [0, 7]. |
| **intensity_mterval_lower_ bound[0][i+1], intensity_ interval_upper_bound[0][i]** | These parameters define the boundaries of the luma intensity levels for which different film grain parameters are defined. The lower bound of interval i+1 must be greater than the upper bound of interval i because multigenerational film grain is not allowed. |
| **num_model_values_minus1 [0]** | This parameter specifies the number of model values present for each intensity interval in which the film grain has been modeled. It shall be in the range [0,2] because color correlation is not allowed. |
| **comp_model_vahie[0][i][0]** | This parameter represents the film grain intensity for each luminance intensity interval in which film grain has been modeled. It shall be in the range [0,255] to ensure film grain simulation can be performed using 16-bit arithmetic. |

According to the present principles, the parameters comp_model_value[0][i][1] and comp_model_value[0][i][2] can take different values. However, only a limited number of different pairs (comp_model_value[0][i][1], comp_model_value[0][i][2]) are allowed, as specified in TABLE 2.

TABLE 2

| comp_model_value[0][i][1] | comp_model_value[0][i][2] |
|---|---|
| 4 | 3 |
| 6 | 4 |
| 7 | 5 |
| 8 | 6 |
| 10 | 7 |
| 11 | 8 |
| 13 | 9 |
| 14 | 10 |
| 15 | 11 |
| 15 | 12 |
| 15 | 13 |
| 15 | 14 |
| 15 | 15 |

All the other parameters of the film grain SEI message have no constraint with respect to the standard specification.

Bit-accurate Implementation of Film Grain Simulation

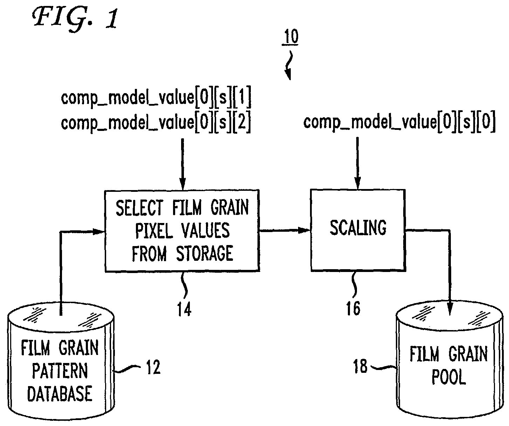

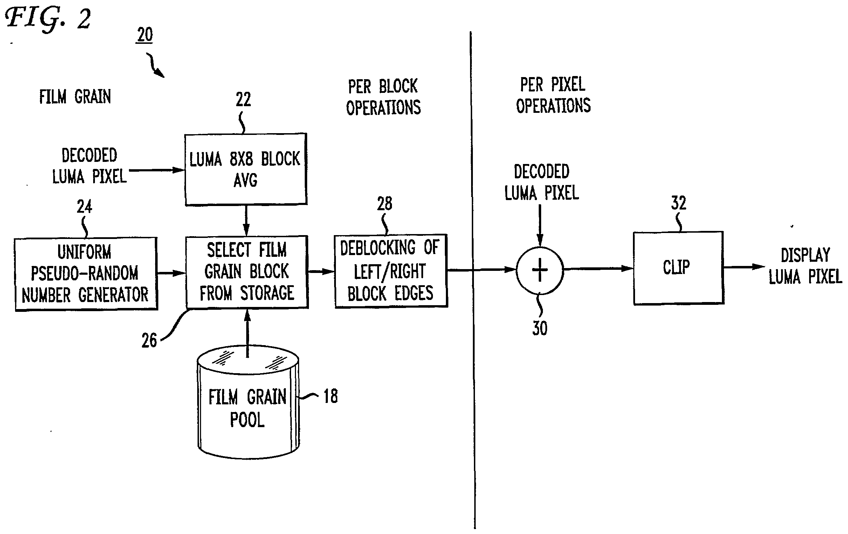

Film grain simulation in accordance with the present principles occurs in a two-step process. First, generation of a pool of film grain blocks occurs during initialization following receipt of an SEI message preceding an I picture, as described in greater detail with respect to FIG. 1. From the pool of film grain blocks, a particular block of values is selected. Thereafter, portions of the selected block are added to each luminance pixel of each decoded picture as described with respect to FIG. 2.

FIGURE 1 depicts an apparatus 10 in accordance with an illustrated embodiment of the present principles for generating a pool of film grain blocks for use in film grain simulation. Upon receipt of a film grain SEI message containing film grain information, an initialization process occurs to create a pool of 4,096 (512x8) film grain pixel values for each of up to 8 different luma intensity intervals. The number of luma intensity intervals is indicated by 1 plus the SEI message field num_intensity_intervals_minus1[0]. Generation of the film grain samples begins with the lowest luma intensity interval.

Bit-accurate simulation of the film grain noise typically occurs by the use of a specified uniform pseudo-random number generator polynomial and by the use of a specified database of film grain patterns 12. In practice, the database 12 of film grain patterns comprises 26 sets of 4,096 (512x8) values of film grain (13 sets with round grain and 13 sets with elongated grain). The values are stored in 2's complement form and range from [-127, 127]. The list of values for each set can be pre-defined and stored in permanent storage accessible by the system or created using a bit accurate method upon system initialization or reset.

The film grain patterns stored in the database 12 undergo selection via a selection block 14 and subsequent scaling via a scaling block 16 to obtain a pool 18 of film grain blocks. The accessing of the database 12 of film grain patterns, the scaling of the values by the block 16, and subsequent storage of the scaled values in blocks in the pool 18 occurs in accordance with the following routine:

for(i = 0..4,095)

$$v = \text{comp\_model\_value}[\,0\,][\,s\,][\,0\,] * \text{database}[\,m\,][\,n\,][\,i\,]$$

$$\text{pool}[\,s\,][\,i\,] = (((v + 2^{\log2\_\text{scale\_factor} - 1}) >> \log2\_\text{scale\_factor}) + 32) >> 6$$

where n is equal to **comp_model_value[0][s][2]** - 3, m is equal to 0 when **num_param_minus1[0]** is 1 and equal to 1 otherwise, and the factor 6 scales the film grain values stored in the database. This process is performed as many times as indicated by 1 plus the SEI message field **num_intensity_intervals_minus1[0].**

Block and pixel operations prior to pixel display

FIGURE 2 depicts an apparatus 20 for performing the operations needed to add film grain to the decoded picture at block and pixel level. A luma averaging block 22 processes each 8x8 block of the decoded image and computes the average of the luma pixel values for comparison against the SEI message **intensity_interval_lower_bound[0][i]** and **intensity_interval_upper_bound[0][i]** parameters to determine the correct luma intensity interval for the block. A uniform random number generator 24 generates a random number for input to a selector block 26 using a primitive polynomial modulo 2 operator, $x^{18} + X^5 + x^2 + x^1 + 1$. The selector block 26 accesses the film grain pool 18 to select film grain blocks in accordance with the random number and luma intensity value.

To appreciate the manner in which the random number generator 24 generates the random number for film grain block selection, let x(i, e) indicate the $i^{th}$ symbol of the sequence x, beginning with an initial seed e. (The seed is set to 1 upon the receipt of each film grain SEI message.) The offset for the current 8x8 block of film grain is generated as follows:

previous_offset = offset

$$\text{offset} = (x(i, 1) \% 4{,}088) >> 2$$

offset ^= (index == previous_offset)
offset <<= 2

where offset has been initialized to 0 after the creation of the pool. After the calculation of the offset, the 8x8 block of film grain is extracted from the pool as follows:

for (i = 0..7, j = 0..7)

$$block[i][j] = pool[s][offset + i + j*4096]$$

The film grain block selected by the selector block in accordance with the random number from the random number generator 24 and the average luminance value from the block 22 undergoes deblocking of the pixels on the left and right columns of the block by a deblocking filter 28 prior to blending. Thereafter, an adder 30 adds the corresponding value of the deblocked film grain block to the corresponding decoded pixels, and a clipper 32 clips the results within the range [0, 255] to yield luma pixels blended with film grain for display on a display (not shown) or for subsequent recording. Note that film grain noise is only added to luma pixels.

Deblocking filter 28

As described, the deblocking filter operates to deblock the film grain block before blending to smooth the blocking artifacts resulting from the small size of the transform. In an illustrative embodiment, the deblocking filter 28 comprises a 3-tap filter applied to all pixels bordering the 8x8 block left and right edges. Given a row of pixels belonging to two adjacent 8x8 blocks, the transition between blocks being located between pixels b and c,

| | | | | | | a | b | c | d | | | | | | |
|---|---|---|---|---|---|---|---|---|---|---|---|---|---|---|---|
| Block A | | | | | | | | Block B | | | | | | | |

the filter is applied as follows:

$$b' = (a + (b << 1) + c) >> 2$$

$$c' = (b + (c << 1) + d) >> 2$$

where b' and c' replace the value of the original pixels b and c, respectively. Deblocking of the left and right block edges is done for every block at display time.

The above-described method for film grain simulation can readily be practiced by content replication devices, such as a DVD player (or player/recorder) or content delivery mechanism such as set top boxes or the like. In the case of a content replication device such as the DVD player or DVD player/recorder, the content medium (e.g., the DVD) would carry the film grain information along with the content itself (i.e., compressed video) to enable the content replication device to simulate film grain in the manner described. Thus, for example a DVD would carry both image information, typically in the form of compressed macroblocks, as well as film grain information, which would enable a DVD player or player/recorder to blend film grain with the decompressed video for subsequent display.

The foregoing describes a technique for simulating film grain in an image. Advantageously, the film grain simulation technique affords the capability of simulating elongated film grain by virtue of the allowed values for the parameter **num_model_values_minus1[0]** as well as the allowed values for the parameters **comp_model_value[0][i][1],** and **comp_model_value[0][i][2].** Moreover, the film grain simulation technique of the present principles, the selection of one set of film grain samples from the database 12 of samples avoids the need for performing a Discrete Cosine Transform (DCT) and an Inverse DCT.

**Claims**

**1.**   A method for creating a block of pixels with film grain for blending with an image to simulate film grain, comprising:

receiving film grain information that includes at least one parameter that specifies an attribute of the film grain to appear in the image block, wherein said at least one parameter comprises a set of cut frequencies and a scaling parameter characterizing the film grain;
selecting a film grain block from among a database of film grain patterns wherein the selection is controlled by said set of cut frequencies characterizing the film grain;

scaling all the pixel values in the block of film grain as indicated by the scaling parameter characterizing the film grain;
and storing the created block of film grain in a pool of film grain blocks.

2.   The method according to claim 1 wherein selecting a film grain block from among a database of film grain patterns further comprises selecting from among a predetermined number of sets of 4096 values each.

3.   The method according to claim 2 wherein each of the predetermined number of sets of values are arranged as a 512 x 8 matrix.

4.   The method according to claim 3 wherein the predetermined number of sets of values are stored in 2's complement and range from [-127, 127].

5.   The method according to claim 1 further comprising:

   selecting a film grain block from among the pool of film grain blocks as a function of a pseudo random number and a luma characteristic of the incoming image;
   deblocking opposing edges of the selected film grain block;
   blending at least a portion of the deblocked selected film grain block with each pixel in the image block; and
   clipping the image block pixels blended with film grain.

6.   A method for simulating film grain in an image block of pixels, comprising:

   selecting a block of film grain from a pool of pre-established film grain blocks as a function of a pseudo-random number and a luma value corresponding to a luma characteristic of the image block;
   deblocking the selected film grain block;
   blending at least a portion of the deblocked film grain block with each pixel of the image block to simulate film grain;
   clipping the resultant blended pixels prior to output;

wherein the pool of pre-established film grain blocks is created by:

   receiving film grain information that includes at least one parameter that specifies an attribute of the film grain to appear in the image block, wherein said at least one parameter comprises a set of cut frequencies and a scaling parameter characterizing the film grain;
   selecting a film grain block from among a database of film grain patterns wherein the selection is controlled by said set of cut frequencies characterizing the film grain; and
   scaling all the pixel values in the block as indicated by the scaling parameter in the received film grain information; and
   storing the created block of film grain into a pool of film grain blocks.

7.   The method according to claim 6 wherein selecting a film grain block from among a database of film grain patterns further comprises selecting from among a predetermined number of sets of 4096 values each.

8.   The method according to claim 7 wherein each of the predetermined number of sets of values is arranged as a 512 x 8 matrix.

9.   The method according to claim 8 wherein the predetermined number of sets of values are stored in 2's complement and range from [-127, 127].

10.  An apparatus for creating a block of pixels with film grain for blending with an image to simulate film grain comprising:

   a first repository storage (12) for storing film grain block in a database of previously established blocks containing film grain;
   a selector (14) for selecting a film grain block from among a database of previously established blocks containing film grain, wherein the selection is controlled by a set of cut frequencies characterizing the film grain;
   a scaling module (16) for scaling all the pixel values in the block of film grain as indicated by a scaling parameter characterizing the film grain; and
   a second repository storage (18) for storing a pool of scaled film grain blocks.

11. An apparatus for simulating film grain in an image block of pixels comprising:

> an apparatus according to claim 10;
> a selector (26) for selecting a block of film grain from the pool of scaled film grain blocks as a function of a pseudo-random number and a luma value corresponding to a luma characteristic of the image block;
> a deblocking filter (28) for deblocking the selected film grain block;
> an adder (30) for blending at least a portion of the deblocked film grain block with each pixel of the image block to simulate film grain; and
> a clipper (32) for clipping the resultant blended pixels prior to output.

12. The apparatus according to claim 11 wherein said selector (14) further selects a film grain block from among a predetermined number of sets of 4096 values each.

13. The apparatus according to claim 12 wherein each of the predetermined number of sets of values is arranged as a 512 x 8 matrix.

14. The apparatus according to claim 13 wherein the predetermined number of sets of values are stored in 2's complement and range from [-127, 127].

**Patentansprüche**

1. Verfahren zum Erzeugen eines Blocks von Pixeln mit Filmkorn zum Verschmelzen mit einem Bild, um Filmkorn zu simulieren, wobei das Verfahren umfasst:

> Empfangen von Filmkorninformationen, die mindestens einen Parameter enthalten, der ein Attribut des Filmkorns spezifiziert, das in dem Bildblock erscheinen soll, wobei der mindestens eine Parameter eine Menge von Grenzfrequenzen und einen Skalierungsparameter, die das Filmkorn charakterisieren, umfasst;
> Auswählen eines Filmkornblocks aus einer Datenbank von Filmkornmustern, wobei die Auswahl durch die Menge von Grenzfrequenzen, die das Filmkorn charakterisieren, gesteuert wird;
> Skalieren aller Pixelwerte in dem Block des Filmkorns, wie sie durch den Skalierungsparameter, der das Filmkorn charakterisiert, angegeben sind;
> und Speichern des erzeugten Blocks von Filmkorn in einem Pool von Filmkornblöcken.

2. Verfahren nach Anspruch 1, wobei das Auswählen eines Filmkornblocks aus einer Datenbank von Filmkornmustern ferner das Auswählen aus einer vorgegebenen Anzahl von Sätzen von jeweils 4096 Werten umfasst.

3. Verfahren nach Anspruch 2, wobei jeder der vorgegebenen Anzahl von Sätzen von Werten als eine 512 x 8-Matrix angeordnet ist.

4. Verfahren nach Anspruch 3, wobei die vorgegebene Anzahl von Sätzen von Werten in einem 2-er Komplement gespeichert sind und in dem Bereich von [-127, 127] liegen.

5. Verfahren nach Anspruch 1, das ferner umfasst:

> Auswählen eines Filmkornblocks aus dem Pool von Filmkornblöcken in Abhängigkeit von einer Pseudozufallszahl und von einer Luma-Charakteristik des ankommenden Bilds;
> Entblocken gegenüberliegender Ränder des ausgewählten Filmkornblocks;
> Verschmelzen mindestens eines Abschnitts des entblockten ausgewählten Filmkornblocks mit jedem Pixel in dem Bildblock; und
> Begrenzen der mit Filmkorn verschmolzenen Bildblockpixel.

6. Verfahren zum Simulieren von Filmkorn in einem Bildblock von Pixeln, wobei das Verfahren umfasst:

> Auswählen eines Blocks von Filmkorn aus einem Pool im Voraus hergestellter Filmkornblöcke in Abhängigkeit von einer Pseudozufallszahl und von einem Luma-Wert, der einer Luma-Charakteristik des Bildblocks entspricht;
> Entblocken des ausgewählten Filmkornblocks;
> Verschmelzen mindestens eines Abschnitts des entblockten Filmkornblocks mit jedem Pixel des Bildblocks, um Filmkorn zu simulieren;

Begrenzen der resultierenden verschmolzenen Pixel vor der Ausgabe;

wobei der Pool im Voraus hergestellter Filmkornblöcke erzeugt wird durch:

Empfangen von Filmkorninformationen, die mindestens einen Parameter enthalten, der ein Attribut des Filmkorns spezifiziert, das in dem Bildblock erscheinen soll, wobei der mindestens eine Parameter eine Menge von Grenzfrequenzen und einen Skalierungsparameter, die das Filmkorn charakterisieren, umfasst;

Auswählen eines Filmkornblocks aus einer Datenbank von Filmkornmustern, wobei die Auswahl durch die Menge von Grenzfrequenzen, die das Filmkorn charakterisieren, gesteuert wird; und

Skalieren aller Pixelwerte in dem Block, wie es durch den Skalierungsparameter in den empfangenen Filmkorninformationen angegeben ist; und

Speichern des erzeugten Blocks von Filmkorn in einem Pool von Filmkornblöcken.

7.  Verfahren nach Anspruch 6, wobei das Auswählen eines Filmkornblocks aus einer Datenbank von Filmkornmustern ferner das Auswählen aus einer vorgegebenen Anzahl von Sätzen von jeweils 4096 Werten umfasst.

8.  Verfahren nach Anspruch 7, wobei jeder der vorgegebenen Anzahl von Sätzen von Werten als eine 512 x 8-Matrix angeordnet ist.

9.  Verfahren nach Anspruch 8, wobei die vorgegebene Anzahl von Sätzen von Werten in einem 2-er Komplement gespeichert sind und in dem Bereich von [-127, 127] liegen.

10. Vorrichtung zum Erzeugen eines Blocks von Pixeln mit Filmkorn zum Verschmelzen mit einem Bild, um Filmkorn zu simulieren, wobei die Vorrichtung umfasst:

einen ersten Ablagespeicher (12) zum Speichern eines Filmkornblocks in einer Datenbank zuvor hergestellter Blöcke, die Filmkorn enthalten;

eine Auswahleinrichtung (14) zum Auswählen eines Filmkornblocks aus einer Datenbank zuvor hergestellter Blöcke, die Filmkorn enthalten, wobei die Auswahl durch einen Satz von Grenzfrequenzen, die das Filmkorn charakterisieren, gesteuert wird;

ein Skalierungsmodul (16) zum Skalieren aller Pixelwerte in dem Block von Filmkorn, wie es durch einen Skalierungsparameter, der das Filmkorn charakterisiert, angegeben ist; und

einen zweiten Ablagespeicher (18) zum Speichern eines Pools skalierter Filmkornblöcke.

11. Vorrichtung zum Simulieren von Filmkorn in einem Bildblock von Pixeln, wobei die Vorrichtung umfasst:

eine Vorrichtung nach Anspruch 10;

eine Auswahleinrichtung (26) zum Auswählen eines Blocks von Filmkorn aus dem Pool skalierter Filmkornblöcke in Abhängigkeit von einer Pseudozufallszahl und von einem Luma-Wert, der einer Luma-Charakteristik des Bildblocks entspricht;

ein Entblockungsfilter (28) zum Entblocken des ausgewählten Filmkornblocks;

einen Addierer (30) zum Verschmelzen mindestens eines Abschnitts des entblockten Filmkornblocks mit jedem Pixel des Bildblocks, um Filmkorn zu simulieren; und

eine Begrenzungseinrichtung (32) zum Begrenzen der resultierten verschmolzenen Pixel vor der Ausgabe.

12. Vorrichtung nach Anspruch 11, wobei die Auswahleinrichtung (14) ferner einen Filmkornblock aus einer vorgegebenen Anzahl von Sätzen von jeweils 4096 Werten auswählt.

13. Vorrichtung nach Anspruch 12, wobei jeder der vorgegebenen Anzahl von Sätzen von Werten als eine 512 x 8-Matrix angeordnet ist.

14. Vorrichtung nach Anspruch 13, wobei die vorgegebene Anzahl von Sätzen von Werten in einem 2-er Komplement gespeichert sind und in einem Bereich von [-127, 127] liegen.

**Revendications**

1. Procédé de création d'un bloc de pixels avec un grain de film pour le mélange d'une image pour simuler un grain de film, comprenant :

   la réception d'informations de grain de film qui incluent au moins un paramètre spécifiant un attribut du grain de film qui apparaîtra dans le bloc d'image, dans lequel ledit au moins un paramètre comprend un ensemble de fréquences de coupure et un paramètre de mise à l'échelle caractérisant le grain de film ;
   la sélection d'un bloc de grain de film dans une base de données de modèles de grain de film dans lequel la sélection est contrôlée par ledit ensemble de fréquences de coupure caractérisant le grain de film ;
   la mise à l'échelle de toutes les valeurs de pixel dans le bloc de grain de film comme indiqué par le paramètre de mise à l'échelle caractérisant le grain de film ;
   et le stockage du bloc de grain de film créé dans un pool de blocs de grain de film.

2. Procédé selon la revendication 1, dans lequel la sélection d'un bloc de grain de film dans une base de données de modèles de grain de film comprend en outre la sélection parmi un nombre prédéterminé d'ensembles de 4 096 valeurs chacun.

3. Procédé selon la revendication 2 dans lequel chaque ensemble de valeurs parmi le nombre prédéterminé d'ensembles de valeurs est disposé en matrice 512 x 8.

4. Procédé selon la revendication 3 dans lequel le nombre prédéterminé d'ensembles de valeurs est stocké dans un complément à deux et est compris dans la plage [-127, 127].

5. Procédé selon la revendication 1, comprenant en outre :

   la sélection d'un bloc de grain de film parmi le pool de blocs de grain de film en fonction d'un nombre pseudo-aléatoire et d'une caractéristique de luminance de l'image entrante ;
   l'application d'un filtre anti-blocs au niveau des bords opposés du bloc de grain de film sélectionné ;
   le mélange d'au moins une partie du bloc de grain de film sélectionné soumis à un filtre anti-blocs avec chaque pixel du bloc d'image ; et
   l'écrêtage des pixels du bloc d'image mélangés avec le grain de film.

6. Procédé de simulation de grain de film dans un bloc de pixels d'image, comprenant :

   la sélection d'un bloc de grain de film dans un pool de blocs de grain de film pré-établis en fonction d'un nombre pseudo-aléatoire et d'une valeur de luminance correspondant à une caractéristique de luminance du bloc d'image ;
   l'application d'un filtre anti-blocs au niveau du bloc de grain de film sélectionné ;
   le mélange d'au moins une partie du bloc de grain de film soumis à un filtre anti-blocs avec chaque pixel du bloc d'image pour simuler un grain de film ; l'écrêtage des pixels mélangés obtenus avant la sortie ;
   dans lequel le pool de blocs de grain de film pré-établis est créé via :

   la réception d'informations de grain de film qui incluent au moins un paramètre spécifiant un attribut du grain de film qui apparaîtra dans le bloc d'image, où ledit au moins un paramètre comprend un ensemble de fréquences de coupure et un paramètre de mise à l'échelle caractérisant le grain de film ;
   la sélection d'un bloc de grain de film dans une base de données de modèles de grain de film dans lequel la sélection est contrôlée par ledit ensemble de fréquences de coupure caractérisant le grain de film ; et
   la mise à l'échelle de toutes les valeurs de pixel dans le bloc comme indiqué par le paramètre de mise à l'échelle dans les informations de grain de film reçues ; et

   le stockage du bloc de grain de film créé dans un pool de blocs de grain de film.

7. Procédé selon la revendication 6, dans lequel la sélection d'un bloc de grain de film dans une base de données de modèles de grain de film comprend en outre la sélection parmi un nombre prédéterminé d'ensembles de 4 096 valeurs chacun.

8. Procédé selon la revendication 7 dans lequel chaque ensemble de valeurs parmi le nombre prédéterminé d'ensembles de valeurs est disposé en matrice 512 x 8.

9. Procédé selon la revendication 8 dans lequel le nombre prédéterminé d'ensembles de valeurs est stocké dans un complément à deux et est compris dans la plage [-127, 127].

10. Appareil de création d'un bloc de pixels avec un grain de film pour le mélange d'une image pour simuler un grain de film, comprenant :

un premier espace de stockage de référentiel (12) pour stocker le bloc de grain de film dans une base de données de blocs précédemment établis contenant un grain de film ;
un sélecteur (14) pour sélectionner un bloc de grain de film dans une base de données de blocs contenant un grain de film, dans lequel la sélection est contrôlée par un ensemble de fréquences de coupure caractérisant le grain de film ;
un module de mise à l'échelle (16) pour mettre à l'échelle toutes les valeurs de pixel dans le bloc de grain de film comme indiqué par un paramètre de mise à l'échelle caractérisant le grain de film ; et
un deuxième espace de stockage de référentiel (18) pour stocker un pool de blocs de grain de film mis à l'échelle.

11. Appareil de simulation de grain de film dans un bloc de pixels d'image comprenant :
un appareil selon la revendication 10 ;

un sélecteur (26) pour sélectionner un bloc de grain de film dans un pool de blocs de grain de film mis à l'échelle en fonction d'un nombre pseudo-aléatoire et d'une valeur de luminance correspondant à une caractéristique de luminance du bloc d'image ;
un filtre anti-blocs (28) appliqué au niveau du bloc de grain de film sélectionné ;
un additionneur (30) pour mélanger au moins une partie du bloc de grain de film soumis à un filtre anti-blocs avec chaque pixel du bloc d'image pour simuler un grain de film ; et
un écrêteur (32) pour écrêter les pixels mélangés obtenus avant la sortie.

12. Appareil selon la revendication 11, dans lequel le sélecteur (14) sélectionne en outre un bloc de grain de film parmi un nombre prédéterminé d'ensembles de 4 096 valeurs chacun.

13. Appareil selon la revendication 12 dans lequel chaque ensemble de valeurs parmi le nombre prédéterminé d'ensembles de valeurs est disposé en matrice 512 x 8.

14. Appareil selon la revendication 13 dans lequel le nombre prédéterminé d'ensembles de valeurs est stocké dans un complément à deux et est compris dans la plage [-127, 127].

## *FIG. 1*

<u>10</u>

comp_model_value[0][s][1]
comp_model_value[0][s][2]

comp_model_value[0][s][0]

```
SELECT FILM GRAIN
PIXEL VALUES
FROM STORAGE
```

```
SCALING
```

14

16

FILM GRAIN
PATTERN
DATABASE

~12

18~

FILM GRAIN
POOL

# FIG. 2

FILM GRAIN

PER BLOCK OPERATIONS

PER PIXEL OPERATIONS

20

22

DECODED LUMA PIXEL → LUMA 8X8 BLOCK AVG

24

UNIFORM PSEUDO-RANDOM NUMBER GENERATOR

SELECT FILM GRAIN BLOCK FROM STORAGE

26

28

DEBLOCKING OF LEFT/RIGHT BLOCK EDGES

FILM GRAIN POOL

18

DECODED LUMA PIXEL

30

32

CLIP → DISPLAY LUMA PIXEL

EP 1 690 423 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 52789503

- US 2003206662 A1, AVINASH GOPAL B

**Non-patent literature cited in the description**

- **CHRISTINA GOMILA.** SEI message for film grain encoding: syntax and results. *JVT OF ISO IEC MPEG AND ITU-T VCEG JVT-I013 REVISION 2,* 02 September 2003